# EUROPÄISCHE PATENTSCHRIFT

(11) **EP 2 664 751 B1**
(45) Veröffentlichungstag und Bekanntmachung des Hinweises auf die Patenterteilung: **10.12.2014**
(21) Anmeldenummer: 13001882.3
(22) Anmeldetag: 11.04.2013
(51) Int. Cl.: F01L 1/02, F16H 57/022, F16H 55/18

(54) **Steuertrieb für eine ventilgesteuerte Brennkraftmaschine**
Camshaft gear train for a valve-controlled internal combustion engine
Distribution pour un moteur à combustion interne commandé par soupape

(30) Priorität: 15.05.2012 DE 102012009604
(43) Veröffentlichungstag der Anmeldung: 20.11.2013
(73) Patentinhaber: MAN Truck & Bus AG, 80995 München (DE)
(72) Erfinder: Werner, Vogel, 91595 Burgoberbach (DE)

(56) Entgegenhaltungen:
- EP-A2- 0 767 326
- EP-A2- 1 867 861
- WO-A1-93/00530
- DE-A1- 2 255 601
- DE-A1- 10 154 069
- FR-A1- 2 508 973
- US-A- 3 734 073
- US-A- 4 747 321
- US-A- 5 540 112
- US-A1- 2009 084 207

## Beschreibung

Die vorliegende Erfindung betrifft einen Steuertrieb für eine ventilgesteuerte Brennkraftmaschine gemäß dem Oberbegriff des Patentanspruchs 1.

Um einen laufruhigen Steuertrieb auch bei auftretenden Wechselmomenten und exakte Ventilsteuerzeiten der Gaswechselventile an Brennkraftmaschinen sicherzustellen, müssen definierte Zahneingriffsverhältnisse und Achsabstände der miteinander kämmenden Stirnzahnräder sichergestellt werden, was im Neuzustand der Brennkraftmaschine kein Problem darstellt. Anders verhält es sich bei gegebenenfalls erforderlichen Reparaturzuständen bzw. einer Maschinenüberholung, bei der zum Beispiel die Dichtfläche des Zylinderkopfes oder die korrespondierende Planfläche am Zylinderkurbelgehäuse nachgearbeitet werden muss, wodurch sich die Achsabstände zwischen der Kurbelwelle und der Nockenwelle und damit verbunden die Zahneingriffsverhältnisse an den Stirnzahnrädern nachteilig verändern.

Durch die AT 001 616 U1 ist ein Steuertrieb bekannt, bei dem die Stirnzahnräder auf der Kurbelwelle und der oben liegenden Nockenwelle über ein Zwischenzahnrad verbunden sind, das auf einem ortsveränderlichen Lagerzapfen gelagert ist. Der Lagerzapfen ist dabei über zwei Schwingen gehalten, die um die Drehachse der Nockenwelle und um die Drehachse der Kurbelwelle schwenkbar sind und die zueinander einen Winkel bilden. Verändern sich die Abstände der Drehachsen zwischen der Kurbelwelle und der Nockenwelle zum Beispiel durch Abplanung der Dichtfläche des Zylinderkopfes, so wird der Lagerzapfen des Zwischenzahnrades entsprechend verändert, wobei die geforderten Zahneingriffe aufrechterhalten bleiben

WO 93/00530 A1 1 und US 5,540,112 A lehren eine Getriebeanordnung mit Spieleinstellvorrichtung mit einem ersten Zahnrad, einem zweiten Zahnrad sowie einem Leerlaufzahnrad welches das erste mit dem zweiten Zahnrad verbindet. Das Leerlaufzahnrad wird von einer Leerlaufzahnradanordnung getragen und ist derart schwenkbar befestigt, dass der Mittenabstand zwischen dem Leerlaufzahnrad und dem zweiten Zahnrad eingestellt werden kann, während ein im wesentlichen fester Abstand aufrechterhalten wird zwischen dem Leerlaufzahnrad und dem ersten Zahnrad.

Aufgabe der Erfindung ist es, einen Steuertrieb der gattungsgemäßen Art vorzuschlagen, der bei einer robusten Konstruktion mit einfachen Mitteln einen exakten

Ausgleich von bei Reparaturzuständen gegebenenfalls auftretenden Achsabständen und gegebenenfalls eine Nachjustierung der Ventilsteuerzeiten ermöglicht.

Die Lösung dieser Aufgabe gelingt mit den Merkmalen des Patentanspruchs 1. Weitere vorteilhafte und besonders zweckmäßige Weiterbildungen der Erfindung sind in den Unteransprüchen angeführt.

Erfindungsgemäß wird vorgeschlagen, dass der Lagerzapfen für das Zwischenzahnrad in zumindest zwei Positionen an der Stirnseite der Brennkraftmaschine befestigbar ist. Diese Positionen entsprechen bevorzugt einem Neuzustand der Brennkraftmaschine und einem definierten Reparaturzustand der Brennkraftmaschine mit veränderten Achsabständen zwischen der Kurbelwelle und der Nockenwelle. Grundgedanke der Erfindung ist es, im Falle einer Überholung der Maschine und einer erforderlichen Abplanung des Zylinder-Kurbelgehäuses und/oder des Zylinderkopfes als ersten Schritt eine definierte Abarbeitung (zum Beispiel 0,5 mm) vorzugeben und am Steuertrieb für den Lagerzapfen eine konstruktiv berechnete, zweite Befestigungsposition vorzusehen, die für den veränderten Achsabstand der Stirnzahnräder wiederum optimale Zahneingriffsverhältnisse ergibt. Die robuste Konstruktion des Steuertriebs mit einem stets festen Lagerzapfen für das Zwischenzahnrad ist in beiden Positionen gegeben.

Bevorzugt kann der Lagerzapfen mittels mehrerer Befestigungselemente, insbesondere Befestigungsschrauben, an der Stirnseite der Brennkraftmaschine befestigbar sein, wobei für jede der Positionen separate Gegenelemente, zum Beispiel Gewindebohrungen, in die Stirnseite eingearbeitet sind. Im Neuzustand oder Reparaturzustand wird dann der Lagerzapfen für das Zwischenzahnrad über die entsprechenden Gewindebohrungen und Befestigungsschrauben in einfacher Weise umgesetzt bzw. fest positioniert.

Zur Sicherstellung einer einfachen Schmierölversorgung können an der Stirnseite der Brennkraftmaschine zwei zur Stirnseite offene Schmieröllanäle vorgesehen sein, die in der einen oder der anderen Position mit einem Schmierölkanal im Lagerzapfen des Zwischenzahnrads fluchten. Dabei kann der Lagerzapfen in der einen oder anderen Position jeweils einen der Schmierölkanäle verschließen. Gegebenenfalls kann aber auch der jeweils eine oder andere Schmierölkanal mittels einer Madenschraube verschlossen werden. Ferner kann in die Mündungen der Schmierölkanäle eine umsetzbare Zentrierbüchse einsetzbar sein, die mit einer entsprechenden Ausnehmung im Lagerzapfen eine exakte Positionierung des Lagerzapfens in der jeweiligen Position bildet.

Eine gegebenenfalls durch die veränderten Achsabstände sich einstellende Ventilsteuerzeitenänderung kann kompensiert werden, indem das Stirnzahnrad auf der Nockenwelle in Umfangsrichtung relativ zur Nockenwelle einstellbar ausgeführt ist. Alternativ kann das Stirnzahnrad auf der Nockenwelle im Reparaturzustand der Brennkraftmaschine durch ein für den Reparaturzustand gefertigtes Stirnzahnrad mit einer der Ventilsteuerzeitenänderung entsprechender, phasenverschobener Verzahnung ersetzbar sein.

In vorteilhafter Weiterbildung der Erfindung kann jedoch ein als Einstellzahnrad ausgeführtes Zwischenzahnrad vorgesehen sein, das über einen weiteren ortsfesten Lagerzapfen an der Stirnseite der Brennkraftmaschine gelagert ist und mittels dem eine exakte Steuerzeiteneinstellung der Ventile der Brennkraftmaschine durchführbar ist.

Das Einstellzahnrad kann insbesondere durch zwei zueinander in Umfangsrichtung verstellbare Zahnräder gebildet sein, von denen das eine Zahnrad mit einem der Stirnzahnräder und das andere Zahnrad mit dem in zwei Positionen umsteckbaren Zwischenzahnrad kämmt. Dieser Vorschlag setzt aber voraus, dass ein zweispuriger Steuertrieb verwendet ist, mit entsprechendem, axialen Versatz der mit dem Einstellzahnrad in Eingriff befindlichen Zahnräder. Zur exakten Einstellung der Ventilsteuerzeiten werden die beiden Zahnräder des Einstellzahnrads zueinander gelockert, sodann die Kurbelwelle und die Nockenwelle in eine definierte OT Position zum Beispiel des Kolbens des ersten Zylinders der Brennkraftmaschine verstellt und dann die Zahnräder des Einstellzahnrads in dieser Position aneinander befestigt. Diese einfache Einstellbarkeit kann sowohl im Neuzustand der Brennkraftmaschine als auch im Reparaturzustand durchgeführt werden. Es kann aber auch vorteilhaft sein, das fertigungstechnisch aufwendigere Einstellzahnrad nur für den Reparaturzustand zu verwenden, während im Neuzustand ein einfaches Stirnzahnrad entsprechender Breite verwendet wird.

Am Einstellzahnrad kann zudem zwischen dessen beiden Zahnrädern eine in eine Umfangsnut des Lagerzapfens eingreifende, zwischen den Zahnrädern gehaltene Sicherungsscheibe eingesetzt sein, wodurch Einstellzahnrad und Lagerzapfen eine Vormontageeinheit bilden können und/oder am Lagerzapfen ein axial führender Lagerbund entfallen kann.

In weiterer, vorteilhafter Ausgestaltung der Erfindung wird vorgeschlagen, dass das Stirnzahnrad auf der Kurbelwelle mit dem größeren Zahnrad eines Stufenzahnrads kämmt, dessen kleineres, achsversetztes Zahnrad mit dem Zwischenzahnrad in Eingriff ist und dass ferner das Zwischenzahnrad mit dem einen Zahnrad des Einstellzahnrads und das zweite Zahnrad des Einstellzahnrads mit dem Stirnzahnrad auf der Nockenwelle kämmt. Damit kann ein räumlich günstiger Steuertrieb geschaffen werden, der neben dem einzustellenden Übersetzungsverhältnis bei Viertaktmaschinen günstige Zahnraddurchmesser ermöglicht, die zum Beispiel eine geringere Bauhöhe der Brennkraftmaschine ermöglichen. Dabei können bevorzugt die Stirnzahnräder auf der Kurbelwelle und der Nockenwelle und das größere Zahnrad des Stufenzahnrads sowie das eine Zahnrad des Einstellzahnrads in einer einheitlichen Zahnradebene und das kleinere Zahnrad auf dem Stufenzahnrad und das zweite Zahnrad des Einstellzahnrads auf einer zweiten, dahinter liegenden Zahnradebene angeordnet sein.

Schließlich können das in zwei Positionen umsteckbare Zwischenzahnrad und gegebenenfalls das Stufenzahnrad an der Stirnseite des Kurbelgehäuses der Brennkraftmaschine und das Einstellzahnrad an der korrespondierenden Stirnseite des Zylinderkopfes angeordnet sein.

Ein Ausführungsbeispiel der Erfindung ist im Folgenden anhand der beigefügten, schematischen Zeichnung näher erläutert. Es zeigen:
Fig. 1 eine Draufsicht auf einen eine oben liegende Nockenwelle antreibenden Steuertrieb einer ventilgesteuerten Brennkraftmaschine mit drei Zwischenzahnrädem, von denen eines als Stufenzahnrad, eines als in zwei Positionen umsetzbares Zwischenzahnrad und eines als Einstellzahnrad ausgeführt ist;
Fig. 2 einen Längsschnitt entlang Linie II - II der Fig. 1 durch den Steuertrieb;
Fig. 3 eine Ansicht auf die in zwei Positionen ausführbare Befestigungsstelle des Lagerzapfens des Zwischenzahnrads mit zwei Mündungsstellen von Schmierölkanälen und den zueinander versetzten Gewindebohrungen in der in der Fig. 1 ersichtlichen Stirnseite des Zylinderkurbelgehäuses der Brennkraftmaschine; und
Fig. 4 in raumbildlicher Darstellung die Vormontageeinheit aus Einstellzahnrad und Lagerzapfen des Steuertriebs gemäß den Fig. 1 und 2.

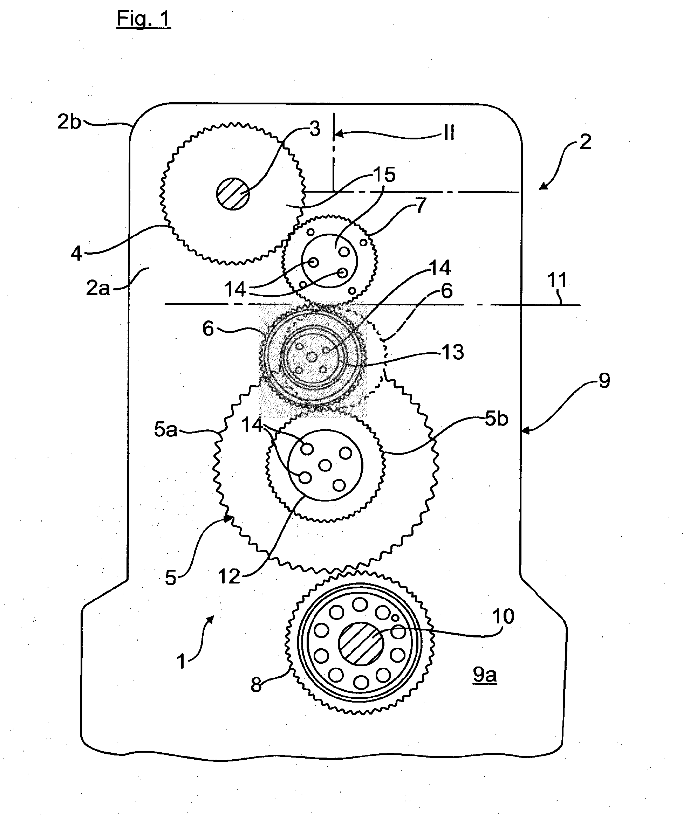

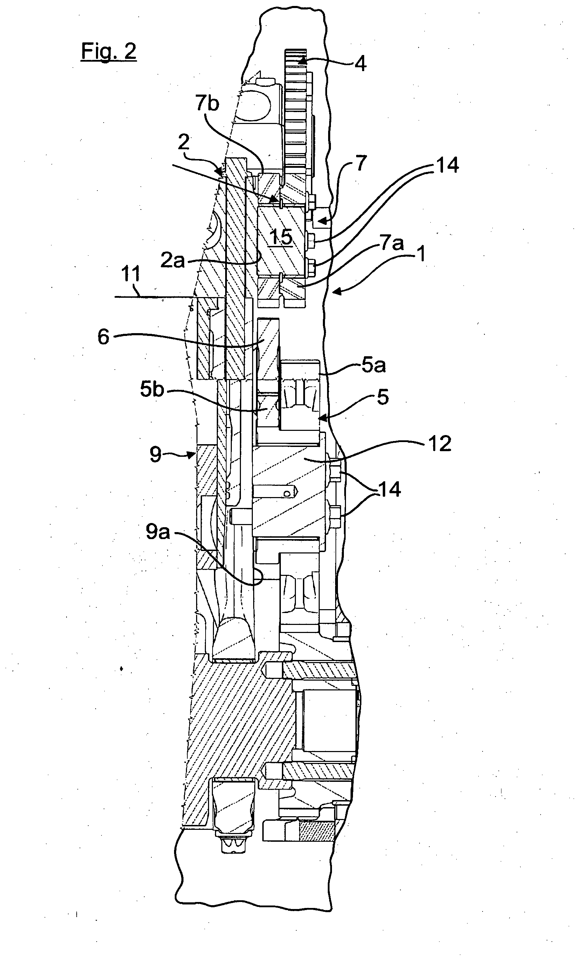

Die Fig. 1 und 2 zeigen einen Steuertrieb 1 für eine ventilgesteuerte Viertakt-Brennkraftmaschine mit einer oben liegenden, in einem Zylinderkopf 2 drehbar gelagerten und in bekannter Weise Gaswechselventile beaufschlagenden Nockenwelle 3 mit einem angetriebenen Stirnzahnrad 4, das über drei Zwischenzahnräder 5, 6, 7 von einem Stirnzahnrad 8 auf einer im Zylinderkurbelgehäuse 9 der Brennkraftmaschine drehbar gelagerten Kurbelwelle 10 angetrieben ist. Der Zylinderkopf 2 ist in der eingezeichneten Dichtebene 11 unter Zwischenschaltung einer nicht dargestellten Zylinderkopfdichtung auf dem Zylinderkurbelgehäuse 9 befestigt und weist eine den Ventiltrieb (nicht dargestellt) abdeckende Ventilhaube 2b auf. Der Steuertrieb 1 ist nur soweit dargestellt, als dies für das Verständnis der vorliegenden Erfindung erforderlicht ist.

Das Zwischenzahnrad 5 ist als Stufenzahnrad mit einem größeren Zahnrad 5a und einem axial benachbarten, kleineren Zahnrad 5b ausgeführt, wobei das Stirnzahnrad 8 auf der Kurbelwelle 10 auf das größere Zahnrad 5a abtreibt, während das kleinere Zahnrad 5b in einer dahinter liegenden Zahnradspur (vergleiche Fig. 2) das Zwischenzahnrad 6 antreibt. Das Stufenzahnrad 5 und das Zwischenzahnrad 6 sind auf Lagerzapfen 12, 13 (Fig. 1) drehbar gelagert, die über jeweils vier Befestigungsschrauben 14 an der Stirnseite 9a des Zylinderkurbelgehäuses 9 befestigt sind.

Das Zwischenzahnrad 6 ist mit einem weiteren Zwischenzahnrad 7 in Eingriff, das zudem mit dem Stirnzahnrad 4 auf der Nockenwelle 3 kämmt und das mittels eines Lagerzapfens 15 drehbar gelagert ist. Der Lagerzapfen 15 ist an der Stirnseite 2a des Zylinderkopfes 2 über zum Beispiel drei Befestigungsschrauben 14 befestigt.

Sollte bei einer Überholung der Brennkraftmaschine in der Dichtebene 11 der Zylinderkopf 2 und/oder das Zylinderkurbelgehäuse 9 zur Wiederherstellung einer planen Dichtfläche um ein vorgeschriebenes Maß von zum Beispiel 0,5 mm abgearbeitet werden, so ändert sich wie aus der Fig. 1 ohne weiteres ableitbar ist der Achsabstand zwischen der Kurbelwelle 10 und der Nockenwelle 3 entsprechend.

Um wieder reguläre Zahneingriffsverhältnisse zwischen dem Zwischenzahnrad 6 am Zylinderkurbelgehäuse 9 und dem Zwischenzahnrad 7 am Zylinderkopf 2 herzustellen, wird das Zwischenzahnrad 6 (es könnte auch das Zwischenzahnrad 7 sein) bzw. dessen Lagerzapfen 13 in eine zweite, konstruktiv vorgegebene Position (in Fig. 1 gestrichelt eingezeichnet) umgesetzt.

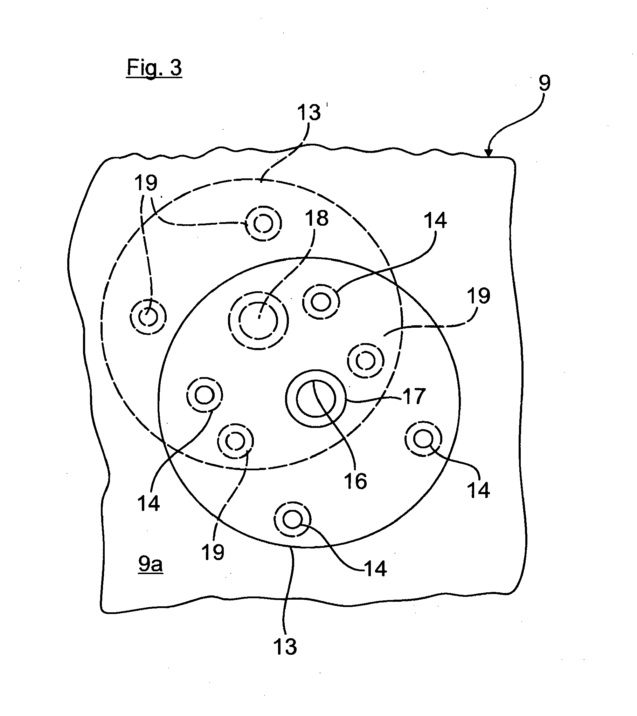

Die Fig. 3 verdeutlicht dies zudem in skizzenhafter Darstellung der Stirnseite 9a des Zylinderkurbelgehäuses 9 mit den Umrissen des aufgesetzten Lagerzapfens 13. Die ausgezogene Linie zeigt dabei die Position des Lagerzapfens 13 im Herstell- bzw. Neuzustand der Brennkraftmaschine und die gestrichelte Linie die Position nach einer Abplanung der Dichtflächen des Zylinderkopfes 2 und/oder des Zylinderkurbelgehäuses 9.

In der Stirnseite 9a ist zentrisch zum Lagerzapfen 13 die Mündungsstelle 16 eines im Kurbelgehäuse 9 integrierten Schmierölkanals vorgesehen, in die eine vorzugsweise konzentrisch im Lagerzapfen 13 liegende Zentrierbüchse 17 eingesetzt ist. Die Zentrierbüchse 17 ragt zudem passgenau in eine korrespondierende Ausnehmung des Lagerzapfens 13 ein, an die ein im Lagerzapfen 13 eingearbeiteter Schmierölkanal (nicht dargestellt) zur Schmierung des Zwischenzahnrads 6 anschließt. Der Lagerzapfen 13 ist mittels der vier Befestigungsschrauben 14 befestigt, die in stirnseitige Gewindebohrungen des Kurbelgehäuses 9 in einem korrespondierenden Lochbild eingeschraubt sind.

Der Lagerzapfen 13 (gestrichelt eingezeichnet) mit dem Zwischenrad 6 kann in eine zweite, einem Reparaturzustand entsprechende Position zur Kompensation der erfolgten Abplanung um 0,5mm und der entsprechend veränderten Achsabstände umgesetzt werden, wobei an der Stirnseite 9a eine zweite Mündungsstelle 18 des Schmierölkanals und ein zweites, entsprechend seitlich und gegebenenfalls verdreht versetztes Lochbild der Gewindebohrungen 19 vorgesehen ist.

Zum Umsetzen des Lagerzapfens 13 wird die Zentrierhülse 17 aus der Mündungsstelle 16 entfernt und in die Mündungsstelle 18 eingesetzt. Wie aus Fig. 3 ersichtlich ist, ist die jeweils ungenutzte Mündungsstelle 16 oder 18 jeweils unmittelbar durch den Lagerzapfen 13 verschlossen (könnte aber zum Beispiel auch durch eine Madenschraube oder dergleichen verschlossen werden).

Die gegebenenfalls durch den Versatz des Lagerzapfens 13 bzw. dessen Zwischenzahnrads 6 bewirkte Ventilsteuerzeitenänderung an der Nockenwelle 3 kann kompensiert werden, indem das Stirnzahnrad 4 auf der Nockenwelle 3 relativ zur Nockenwelle 3 verstellbar ausgeführt ist, wodurch lediglich eine Neueinstellung der Ventilsteuerzeiten in an sich bekannter Weise durchzuführen ist.

Alternativ kann zu dem Stirnzahnrad 4 ein modifiziertes Stirnzahnrad 4 gefertigt und im Reparaturfall montiert werden, dessen Verzahnung im Ausmaß der fest vorgegebenen Ventilsteuerzeitenänderung phasenverschoben gefertigt ist. Der Steuertrieb 5 könnte dann praktisch wie im Neuzustand der Brennkraftmaschine ohne zusätzlichen Einstellaufwand wieder montiert werden.

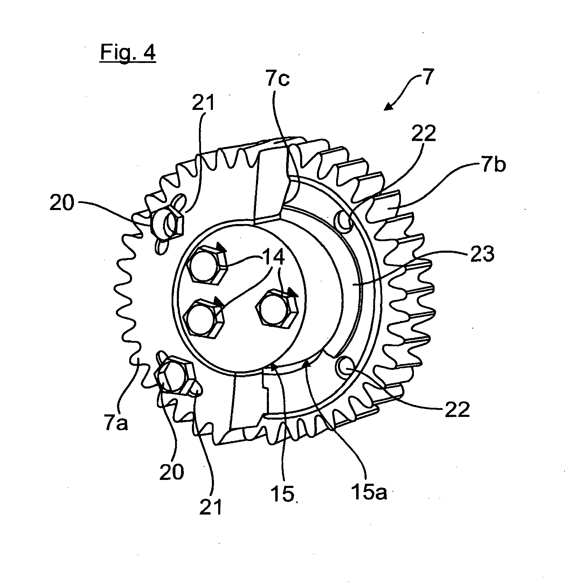

Im Ausführungsbeispiel wird jedoch das Zwischenzahnrad 7 als Einstellzahnrad (Fig. 4) ausgeführt, das sich aus zwei Zahnrädern 7a, 7b zusammensetzt, die gemeinsam auf dem Lagerzapfen 15 drehbar gelagert und mittels Schrauben 20 aneinander befestigt sind. Die hier lediglich beispielhaft vier Schrauben 20 durchgreifen langlochförmige Ausnehmungen 21 im einen Zahnrad 7a und wirken mit korrespondierenden Gewindebohrungen 22 im zweiten Zahnrad 7b zusammen. Durch Lockern der Schrauben 20 können die beiden Zahnräder 7a, 7b relativ zueinander in Umfangsrichtung verstellt werden.

Zwischen den beiden axial unmittelbar benachbarten Zahnrädern 7a, 7b ist eine U-förmige Sicherungsscheibe 23 eingeschoben, die radial innenliegend in eine Umfangsnut 15a des Lagerzapfens 15 eingreift und die radial außenliegend in einer ringförmigen Ausnehmung 7c des einen Zahnrads 7a gehalten ist.

Mittels der Sicherungsscheibe 23 werden die beiden Zahnräder 7a, 7b axial unverlierbar auf dem Lagerzapfen 15 justiert und bilden eine Vormontageeinheit, sobald die beiden Zahnräder 7a, 7b mittels der Schrauben 20 aneinander lose befestigt sind. Die Sicherungsscheibe 23 beeinträchtigt aber nicht die freie Drehbarkeit des Einstellzahnrads 7 auf dem Lagerzapfen 15. Der Steuertrieb 1 kann in Neuzustand der Brennkraftmaschine mit einem einheitlichen Zwischenzahnrad 7 entsprechender Breite (gleich den beiden Zahnrädern 7a, 7b) ausgeführt sein, in dem die Ventilsteuerzeit konstruktiv vorgegeben durch einfache Montage der gesamten Zahnräder 5 bis 8 erfolgt, wobei die Stirnzahnräder 4 und 8 zum Beispiel über Keilverbindungen zur Nockenwelle 3 und zur Kurbelwelle 10 genau fixiert sind.

Alternativ kann der Steuertrieb 1 als Zwischenzahnrad 7 (oder gegebenenfalls als Zwischenzahnrad 6) das Einstellzahnrad 7 aufweisen. Dann werden die gesamten Zahnräder 4 bis 8 bei gelockerten Schrauben 20 am Einstellzahnrad 7 montiert, dann die Kurbelwelle 10 und die Nockenwelle 3 mit Hilfe von angebrachten Markierungen an den Zahnrädern 4 und 8 oder unter Verwendung einer Einstelllehre in eine definierte Drehwinkellage zueinander (zum Beispiel in OT Lage des Kolbens des Zylinders 1) fixiert und schließlich die Schrauben 20 des Einstellzahnrads 7 fest angezogen.

Die gleiche Prozedur wird nach einer Überholung der Brennkraftmaschine im Reparaturzustand nach Abplanung zum Beispiel des Zylinderkopfes 2 durchgeführt, jedoch erst nach Umsetzung des Zwischenzahnrads 6 in die vorbeschriebene, zweite Position (Gewindebohrungen 19).

Die Erfindung ist nicht auf das dargestellte Ausführungsbeispiel des Steuertriebs 1 beschränkt. In einer einfachsten Ausführung entsprechend der eingangs genannten AT 001 616 U1 könnte auch ein einspuriger Zahnradtrieb mit nur einem Zwischenzahnrad 6 oder gegebenenfalls mit zwei Zwischenzahnrädern 6 und 7 vorgesehen sein.

### BEZUGSZEICHENLISTE

- 1: Steuertrieb
- 2: Zylinderkopf
- 2a: Stirnseite
- 2b: Ventilhaube
- 3: Nockenwelle
- 4: Stirnzahnrad
- 5: Stufenzahnrad
- 5a: Zahnrad
- 5b: Zahnrad
- 6: Zwischenzahnrad.
- 7: Einstellzahnrad
- 7a: Zahnrad
- 7b: Zahnrad
- 7c: ringförmige Ausnehmung
- 8: Stirnzahnrad
- 9: Zylinderkurbelgehäuse
- 9a: Stirnfläche
- 10: Kurbelwelle
- 11: Dichtfläche
- 12: Lagerzapfen
- 13: Lagerzapfen
- 14: Befestigungsschrauben
- 15: Lagerzapfen
- 15a: Ringnut
- 16: Mündung Schmierölkanal
- 17: Zentrierbüchse
- 18: Mündung Schmierölkanal
- 19: Gewindebohrungen
- 20: Schrauben
- 21: Langlochförmige Ausnehmungen
- 22: Gewindebohrungen
- 23: Sicherungsscheibe

## Patentansprüche

1. Steuertrieb für eine ventilgesteuerte Brennkraftmaschine, deren zumindest eine Nockenwelle im Zylinderkopf der Brennkraftmaschine gelagert und über Stirnzahnräder angetrieben ist, wobei ein antreibendes Stirnzahnrad auf der im Zylinderkurbelgehäuse der Brennkraftmaschine gelagerten Kurbelwelle, ein angetriebenes Stirnzahnrad auf der Nockenwelle und zumindest ein auf einem Lagerzapfen gelagertes, ortsveränderliches Zwischenzahnrad vorgesehen sind, wobei der Lagerzapfen (13) für das Zwischenzahnrad (6) in zumindest zwei Positionen an der Stirnseite (9a) der Brennkraftmaschine befestigbar ist, welche Positionen einem Neuzustand der Brennkraftmaschine und einem definierten Reparaturzustand der Brennkraftmaschine mit gezielt veränderten Achsabständen zwischen der Kurbelwelle (10) und der Nockenwelle (3) entsprechen, **dadurch gekennzeichnet, dass** an der Stirnseite (9a) der Brennkraftmaschine zur Stirnseite (9a) offene Schmieröl-Kanäle (16, 18) vorgesehen sind, die in der einen oder der anderen Zwischenzahnrad-Position mit einem Schmierölkanal im Lagerzapfen (13) des Zwischenzahnrads (6) fluchten wobei die Schmierölkanäle (16, 18) so ausgerichtet sind, dass der Lagerzapfen (13) in der einen oder anderen Position jeweils einen der Schmierölkanäle (16, 18) verschließt.

2. Steuertrieb nach Anspruch 1, **dadurch gekennzeichnet, dass** der Lagerzapfen (13) mittels mehrerer Befestigungselemente, insbesondere Befestigungsschrauben (14), an der Stirnseite (9a) befestigbar ist, wobei für jede der Positionen separate Gegenelemente, insbesondere Gewindebohrungen (19) in die Stirnseite (9a) eingearbeitet sind.

3. Steuertrieb nach Anspruch 1 oder 2, **dadurch gekennzeichnet, dass** in die Mündungen (16, 18) der Schmieröl-Kanäle eine Zentrierbüchse (17) einsetzbar ist, die mit einer entsprechenden Ausnehmung im Lagerzapfen (13) eine exakte Positionierung des Lagerzapfens (13) in der jeweiligen Position bilden.

4. Steuertrieb nach einem der vorhergehenden Ansprüche, **dadurch gekennzeichnet, dass** das Stirnzahnrad (4) auf der Nockenwelle (3) in Umfangsrichtung relativ zur Nockenwelle (3) einstellbar ausgeführt ist.

5. Steuertrieb nach einem der Ansprüche 1 bis 4, **dadurch gekennzeichnet, dass** das Stirnzahnrad (4) auf der Nockenwelle (3) im Reparaturzustand der Brennkraftmaschine durch ein Stirnzahnrad mit einer der Ventilsteuerzeitenänderung entsprechender, phasenverschobener Verzahnung ersetzbar ist.

6. Steuertrieb nach einem der vorhergehenden Ansprüche 1 bis 3, **dadurch gekennzeichnet, dass** ein weiteres, als Einstellzahnrad (7) ausgeführtes Zwischenzahnrad vorgesehen ist, das über einen weiteren ortsfesten Lagerzapfen (15) an der Stirnseite (2a) der Brennkraftmaschine gelagert ist und mittels dem eine exakte Steuerzeiteneinstellung der Ventile der Brennkraftmaschine durchführbar ist.

7. Steuertrieb nach Anspruch 6, **dadurch gekennzeichnet, dass** das Einstellzahnrad (7) durch zwei zueinander in Umfangsrichtung verstellbare Zahnräder (7a, 7b) gebildet ist, von denen das eine Zahnrad (7a) mit einem der Stirnzahnräder (4) und das andere Zahnrad (7b) mit dem in zwei Positionen umsteckbaren Zwischenzahnrad (6) kämmt und die über eine Schraubverbindung (20, 22) aneinander befestigt sind.

8. Steuertrieb nach Anspruch 7, **dadurch gekennzeichnet, dass** zwischen den beiden Zahnrädern (7a, 7b) des Einstellzahnrads (7) eine in eine Umfangsnut (15a) des Lagerzapfens (15) eingreifende, zwischen den Zahnrädern (7a, 7b) gehaltene Sicherungsscheibe (23) eingesetzt ist.

9. Steuertrieb nach einem der vorhergehenden Ansprüche, **dadurch gekennzeichnet, dass** das Stirnzahnrad (8) auf der Kurbelwelle (10) mit dem größeren Zahnrad (5a) eines Stufenzahnrads (5) kämmt, dessen kleineres, achsversetztes Zahnrad (5b) mit dem Zwischenzahnrad (6) in Eingriff ist, dass ferner das Zwischenzahnrad (6) mit dem einen Zahnrad (7b) des Einstellzahnrads (7) und das zweite Zahnrad (7a) des Einstellzahnrads (7) mit dem Stirnzahnrad (4) auf der Nockenwelle (3) kämmt.

10. Steuertrieb nach Anspruch 9, **dadurch gekennzeichnet, dass** die Stirnzahnräder (8, 4) auf der Kurbelwelle (10) und der Nockenwelle (3) und das größere Zahnrad (5a) des Stufenzahnrads (5) sowie das eine Zahnrad (7a) des Einstellzahnrads (7) in einer einheitlichen Zahnradebene und das kleinere Zahnrad (5b) auf dem Stufenzahnrad (5) und das zweite Zahnrad (7b) des Einstellzahnrads (7) auf einer zweiten, dahinter liegenden Zahnradebene angeordnet sind.

11. Steuertrieb nach einem der vorhergehenden Ansprüche, **dadurch gekennzeichnet, dass** das Zwischenzahnrad (6) und gegebenenfalls das Stufenzahnrad (5) an der Stirnseite (9a) des Kurbelgehäuses (9) der Brennkraftmaschine und das Einstellzahnrad (7) an der korrespondierenden Stirnseite (2a) des Zylinderkopfes (2) angeordnet sind.

12. Steuertrieb nach einem der vorhergehenden Ansprüche, **dadurch gekennzeichnet, dass** der Lagerzapfen (13) mittels Befestigungsschrauben (14) befestigbar ist, die in stirnseitige Gewindebohrungen des Kurbelgehäuses (9) in einem korrespondierenden Lochbild einschraubbar sind und an der Stirnseite (9a) ein zweites, entsprechend seitlich und gegebenenfalls verdreht versetztes Lochbild der Gewindebohrungen (19) vorgesehen ist.

## Claims

1. A timing drive for a valve-controlled internal combustion engine, the at least one camshaft of which is mounted in the cylinder head of the internal combustion engine and is driven via spur gearwheels, wherein a driving spur gearwheel is provided on the crankshaft mounted in the engine block of the internal combustion engine, a driven spur gearwheel is provided on the camshaft, and at least one variable-location intermediate gearwheel mounted on a bearing journal is provided, wherein the bearing journal (13) for the intermediate gearwheel (6) can be fixed in at least two positions on the end (9a) of the internal combustion engine, said positions corresponding to a new condition of the internal combustion engine and to a defined repair condition of the internal combustion engine with deliberately modified centre distances between the crankshaft (10) and the camshaft (3), **characterized in that** lubricating-oil ducts (16, 18) are provided at the end (9a) of the internal combustion engine, said ducts being open towards the end (9a) and being in alignment with a lubricating-oil duct in the bearing journal (13) of the intermediate gearwheel (6) in each of the intermediate gearwheel positions, wherein the lubricating-oil ducts (16, 18) are aligned in such a way that the bearing journal (13) closes one of the lubricating oil ducts (16, 18) in each of the positions.

2. The timing drive according to Claim 1, **characterized in that** the bearing journal (13) can be fixed on the end (9a) by means of a plurality of fastening elements, in particular fastening screws (14), wherein separate mating elements, in particular threaded bores (19), are machined into the end (9a) for each of the positions.

3. The timing drive according to Claim 1 or 2, **characterized in that** a centring bush (17) can be inserted into the outlets (16, 18) of the lubricating-oil ducts, said bush forming, together with a corresponding recess in the bearing journal (13), a means for precise positioning of the bearing journal (13) in the respective position.

4. The timing drive according to one of the preceding claims, **characterized in that** the spur gearwheel (4) is embodied in such a way that it is adjustable on the camshaft (3) in the circumferential direction relative to the camshaft (3).

5. The timing drive according to one of Claims 1 to 4, **characterized in that** the spur gearwheel (4) can be replaced on the camshaft (3) in the repair condition of the internal combustion engine by a spur gearwheel with phase-shifted toothing corresponding to the change in the valve timing.

6. The timing drive according to one of preceding Claims 1 to 3, **characterized in that** a further intermediate gearwheel embodied as an adjusting gearwheel (7) is provided, which is mounted on the end (2a) of the internal combustion engine by means of a further fixed-location bearing journal (15) and by means of which precise adjustment of the timing of the valves of the internal combustion engine can be carried out.

7. The timing drive according to Claim 6, **characterized in that** the adjusting gearwheel (7) is formed by two gearwheels (7a, 7b) which can be adjusted relative to one another in the circumferential direction, of which one gearwheel (7a) meshes with one of the spur gearwheels (4) and the other gearwheel (7b) meshes with the intermediate gearwheel (6), the latter being transferable between two positions, and which are fastened to one another by means of a screwed joint (20, 22).

8. The timing drive according to Claim 7, **characterized in that** a retaining washer (23), which engages in a circumferential groove (15a) on the bearing journal (15) and is held between the gearwheels (7a, 7b), is inserted between the two gearwheels (7a, 7b) of the adjusting gearwheel (7).

9. The timing drive according to one of the preceding claims, **characterized in that** the spur gearwheel (8) on the crankshaft (10) meshes with the larger gearwheel (5a) of a stepped gearwheel (5), the smaller, axially offset gearwheel (5b) of which is in engagement with the intermediate gearwheel (6), and **in that** furthermore the intermediate gearwheel (6) meshes with one gearwheel (7b) of the adjusting gearwheel (7), and the second gearwheel (7a) of the adjusting gearwheel (7) meshes with the spur gearwheel (4) on the camshaft (3).

10. The timing drive according to Claim 9, **characterized in that** the spur gearwheels (8, 4) on the crankshaft (10) and on the camshaft (3), the larger gearwheel (5a) of the stepped gearwheel (5) and one gearwheel (7a) of the adjusting gearwheel (7) are arranged in a single gearwheel plane, and the smaller gearwheel (5b) on the stepped gearwheel (5) and the second gearwheel (7b) of the adjusting gearwheel (7) are arranged in a second gearwheel plane situated behind the first.

11. The timing drive according to one of the preceding claims, **characterized in that** the intermediate gearwheel (6) and, if appropriate, the stepped gearwheel (5) is/are arranged on the end (9a) of the crankcase (9) of the internal combustion engine, and the adjusting gearwheel (7) is arranged on the corresponding end (2a) of the cylinder head (2).

12. The timing drive according to one of the preceding claims, **characterized in that** the bearing journal (13) can be fixed by means of fastening screws (14), which can be screwed into threaded end bores in the crankcase (9) in a corresponding hole pattern, and a second hole pattern of the threaded bores (19), offset laterally in a corresponding manner and rotated, if required, is provided on the end (9a).

## Revendications

1. Distribution pour un moteur à combustion interne commandé par soupapes, dont l'au moins un arbre à cames est monté dans la tête de cylindre du moteur à combustion interne et est entraîné par le biais de roues à denture droite, une roue à denture droite d'entraînement étant prévue sur le vilebrequin monté dans le bloc moteur du moteur à combustion interne, une roue à denture droite entraînée étant prévue sur l'arbre à cames et au moins une roue dentée intermédiaire mobile montée sur un tourillon de palier étant prévue, le tourillon de palier (13) pour la roue dentée intermédiaire (6) pouvant être fixé en au moins deux positions sur le côté frontal (9a) du moteur à combustion interne, lesquelles positions correspondent à un état neuf du moteur à combustion interne et à un état de réparation défini du moteur à combustion interne avec des entraxes modifiés de manière ciblée entre le vilebrequin (10) et l'arbre à cames (3), **caractérisée en ce que** des canaux d'huile lubrifiante (16, 18) ouverts en direction du côté frontal (9a) sont prévus sur le côté frontal (9a) du moteur à combustion interne, lesquels canaux sont, dans l'une ou l'autre des positions de la roue dentée intermédiaire, en alignement avec un canal d'huile lubrifiante dans le tourillon de palier (13) de la roue dentée intermédiaire (6), les canaux d'huile lubrifiante (16, 18) étant orientés de telle sorte que le tourillon de palier (13) ferme respectivement l'un des canaux d'huile lubrifiante (16, 18) dans l'une ou l'autre des positions.

2. Distribution selon la revendication 1, **caractérisée en ce que** le tourillon de palier (13) peut être fixé sur le côté frontal (9a) au moyen de plusieurs éléments de fixation, en particulier de vis de fixation (14), des éléments conjugués séparés, en particulier des alésages filetés (19), pour chacune des positions étant incorporés dans le côté frontal (9a).

3. Distribution selon la revendication 1 ou 2, **caractérisée en ce qu'**une douille de centrage (17) peut être insérée dans les embouchures (16, 18) des canaux d'huile lubrifiante, laquelle douille de centrage forme, avec un évidement correspondant dans le tourillon de palier (13), un positionnement exact du tourillon de palier (13) dans la position respective.

4. Distribution selon l'une quelconque des revendications précédentes, **caractérisée en ce que** la roue à denture droite (4) est réalisée de manière à pouvoir être ajustée sur l'arbre à cames (3) dans la direction périphérique par rapport à l'arbre à cames (3).

5. Distribution selon l'une quelconque des revendications 1 à 4, **caractérisée en ce que** la roue à denture droite (4) sur l'arbre à cames (3) peut, dans l'état de réparation du moteur à combustion interne, être remplacée par une roue à denture droite présentant une denture déphasée correspondant à la modification des temps de commande de soupape.

6. Distribution selon l'une quelconque des revendications 1 à 3, **caractérisée en ce qu'**une roue dentée intermédiaire supplémentaire réalisée sous forme de roue d'ajustement (7) est prévue, laquelle est montée sur le côté frontal (2a) du moteur à combustion interne par le biais d'un tourillon de palier fixe supplémentaire (15) et au moyen de laquelle un ajustement exact des temps de commande des soupapes du moteur à combustion interne peut être effectué.

7. Distribution selon la revendication 6, **caractérisée en ce que** la roue dentée d'ajustement (7) est formée par deux roues dentées (7a, 7b) déplaçables l'une par rapport à l'autre dans la direction périphérique, parmi lesquelles l'une des roues dentées (7a) s'engrène avec l'une des roues à denture droite (4) et l'autre roue dentée (7b) s'engrène avec la roue dentée intermédiaire (6) pouvant être permutée dans deux positions, et lesquelles sont fixées l'une à l'autre au moyen d'une liaison vissée (20, 22).

8. Distribution selon la revendication 7, **caractérisée en ce qu'**une rondelle de blocage (23) maintenue entre les roues dentées (7a, 7b) et venant en prise dans une rainure périphérique (15a) du tourillon de palier (15) est insérée entre les deux roues dentées (7a, 7b) de la roue dentée d'ajustement (7).

9. Distribution selon l'une quelconque des revendications précédentes, **caractérisée en ce que** la roue à denture droite (8) sur le vilebrequin (10) s'engrène avec la plus grande roue dentée (5a) d'une roue dentée étagée (5) dont la plus petite roue dentée décalée axialement (5b) est en prise avec la roue dentée intermédiaire (6), et **en ce qu'**en outre la roue dentée intermédiaire (6) s'engrène avec l'une des roues dentées (7b) de la roue dentée d'ajustement (7) et la deuxième roue dentée (7a) de la roue dentée d'ajustement (7) s'engrène avec la roue à denture droite (4) sur l_{'}arbre à cames (3).

10. Distribution selon la revendication 9, **caractérisée en ce que** les roues à denture droite (8, 4) sur le vilebrequin (10) et l'arbre à cames (3) et la plus grande roue dentée (5a) de la roue dentée étagée (5) ainsi que l'une des roues dentées (7a) de la roue dentée d'ajustement (7) sont disposées dans un plan de roues dentées unique et la plus petite roue dentée (5b) sur la roue dentée étagée (5) et la deuxième roue dentée (7b) de la roue dentée d'ajustement (7) sont disposées sur un deuxième plan de roues dentées situé derrière celui-ci.

11. Distribution selon l'une quelconque des revendications précédentes, **caractérisée en ce que** la roue dentée intermédiaire (6) et éventuellement la roue dentée étagée (5) sont disposées sur le côté frontal (9a) du bloc moteur (9) du moteur à combustion interne, et la roue dentée d'ajustement (7) est disposée sur le côté frontal correspondant (2a) de la tête de cylindre (2).

12. Distribution selon l'une quelconque des revendications précédentes, **caractérisée en ce que** le tourillon de palier (13) peut être fixé au moyen de vis de fixation (14) qui peuvent être vissées dans des alésages filetés frontaux du bloc moteur (9) dans une configuration de trous correspondante, et une deuxième configuration de trous, décalée latéralement de manière correspondante et éventuellement en rotation, des alésages filetés (19) étant prévue sur le côté frontal (9a).
